# EUROPEAN PATENT SPECIFICATION

(11) **EP 0 337 245 B1**
(45) Date of publication and mention of the grant of the patent: **10.02.1993**
(21) Application number: 89105854.7
(22) Date of filing: 04.04.1989
(51) Int. Cl.: B60B 33/02, B62B 5/04

(54) **A braking device for castors**
Bremsvorrichtung für Lenkrollen
Dispositif de freinage pour roues à pivot

(30) Priority: 06.04.1988 IT 5304588 U
(43) Date of publication of application: 18.10.1989
(73) Proprietor: TELLURE ROTA S.p.A., 41043 Formigine (Modena) (IT)
(72) Inventor: Santachiara, Andrea, I-41040 Spezzano (Modena) (IT)
(74) Representative: Bosotti, Luciano

(56) References cited:
- EP-A- 0 141 270
- DE-A- 2 542 243
- DE-A- 3 248 508
- DE-A- 3 633 945
- DE-U- 8 706 475
- FR-A- 2 417 425
- GB-A- 1 145 756

## Description

The present invention relates to a device for the braking of castors mounted on supports connected to movable structures, such as, for example, street-cleaning trolleys.

The invention particularly concerns a device of the type according to the pre-characterising portion of Claim 1.

A device of the type set forth above, and corresponding to the preamble of claim 1, is described in EP-A-0 141 270. It comprises a swinging member hinged to the operating pedal, the swinging member having a first end adapted to be inserted into an outward corresponding seat of the structure whereby to lock the pedal in the position of braking of the castor, and a second end which cooperates with a spring for holding the swinging member in said position. Because of the outward arrangement of said seat and of the dirty working environment of the device, the seat is frequently subjected to be obstructed by foreign matters which prevent the correct locking of the pedal.

The object of the present invention is to produce a braking device of the type defined above, which is simple and cheap to produce and which is free from the aforesaid drawbacks.

According to the invention, this object is achieved by virtue of the features disclosed in the characterising portion of Claim 1.

By virtue of this characteristic, the system for locking the parking brake is extremely simple, requiring for instance the use of a simple spring urging a ratchet.

The pedal preferably comprises a seat for a releasing key for disengaging the corresponding portion of structure from the appendage.

Thus, once the parking brake pedal has been operated, it is not possible to release the brake without the aid of the appropriate key.

Further characteristics and advantages of the device according to the invention will become clear from the following detailed description provided by way of non-limiting example, in which:
Figure 1 is a perspective view of a device according to the invention installed on a street-cleaning trolley,
Figure 2 is a detail of Figure 1 on an enlarged scale,
Figure 3 is a side view of the braking device of Figure 1,
Figure 4 is a plan view of the device of Figure 3,
Figure 5 is a plan view of the pedal for operating the device,
Figure 6 is a section taken on the line VI-VI of Figure 5,
Figure 7 is a section taken on the line VII-VII of Figure 2,
Figure 8 is a section taken on the line VIII-VIII of Figure 1.

With reference to the drawings, a street-cleaning trolley, indicated C, is provided with supports 1 for castors 2. As is known, each support 1 has an attachment plate 3 which is intended to be fixed to the bottom of the trolley C, a fork-shaped element 4 mounted for rotation relative to the attachment plate 3, and an annular element 5 for connecting the plate 3 and the fork-shaped element 4.

The fork-shaped element 4 rotates relative to the attachment plate 3 by means of two rings of balls, 6 and 7 respectively. The attachment plate 3 has an annular track 3a on its lower surface for the ring of balls 6 and is also provided with a central hole 8 within which a portion 9a of a bush 9 of plastics material is fixed for guiding a push-rod 10 which forms part of a parking brake, generally indicated 11. This brake is constituted by a spring plate 12 pivotally supported like a rocker arm above the castor 2 by the arms of the fork-shaped element, as well as by the push-rod 10 which is mounted for vertical sliding in the bush 9. A brake of this type is described and illustrated in Italian industrial patent application No. 53057-B/85 referred to herein. Without going into detail, therefore, it will suffice in this respect to recall that the downward movement of the push-rod 10 causes the pivoting of the spring plate 12 to bring one end 12a into contact with the castor 2 and a portion 12b into engagement with a corresponding peripheral set of teeth 13 on the annular element 5 to prevent the fork-shaped element 4 from rotating.

The bush 9 is constituted by two half-shells, A and B respectively, joined together in correspondence with the annular element 5 and, at the top, with the aid of a U-shaped connecting element 16 for preventing the two half-shells A and B from coming apart. A seat 15 is also formed in the bush 9 for rotatably supporting a hexagonal operating bar 17 and for rotatably housing a disc-shaped cam 18 keyed to the bar 17. Each cam 18 has a first edge portion 18a for cooperating with a hemispherical end of the push-rod 10 and a second edge portion 18b having radial shoulders 19 for cooperating with a recessed portion 16a of the connecting element 16 in order to limit the angle of rotation of the cam 18.

The cams 18 are made from two pieces joined together, in order to achieve the desired thickness at a low cost.

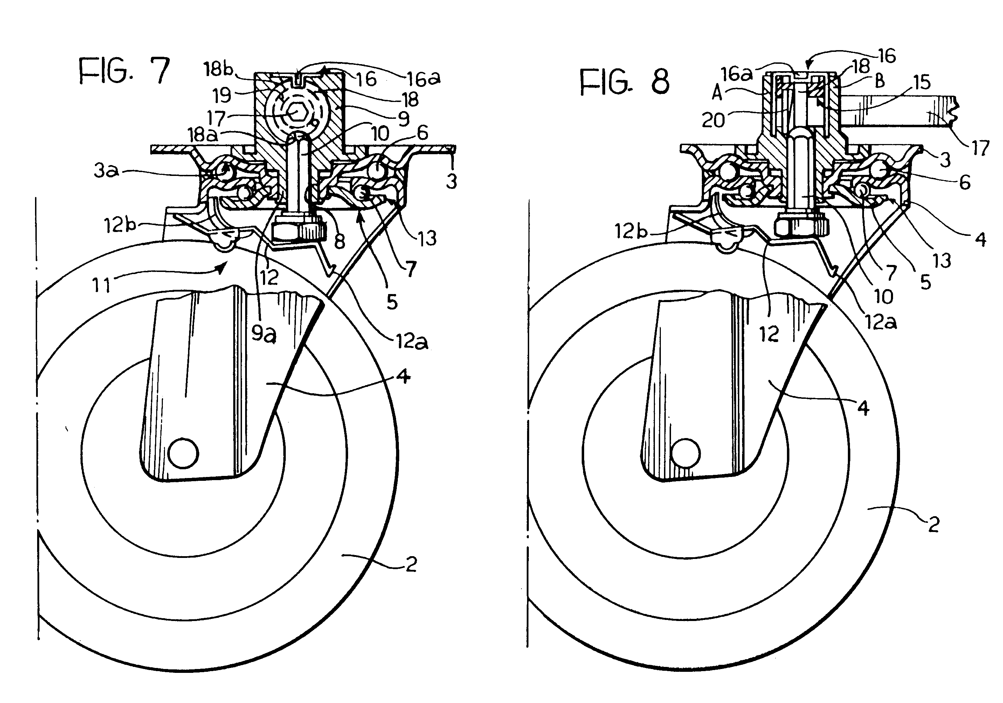

A helical torsion spring 20 is interposed between the body of the bush 9 and the cam 18 for biassing the cam into the configuration shown in Figures 7 and 8, corresponding to the condition in which the brakes of the castors 2 are not applied. The cam 18, the spring 20 and the upper part of the push-rod 10 are all enclosed within the two half-shells A and B in order to protect the device from dirt, water, etc. normally present in the working environment.

An operating pedal 22 is keyed to one end of the operating bar 17 and has a substantially double-T-shaped structure. A ratchet 24 is slidably mounted between flanges 22a of the pedal 22 and has a stem 24a guided by a hole 30 of the pedal 22 and an end 24b guided by a hole 31 of the pedal 22 and having an inclined face 32. A compression helical spring 23 coaxial to the stem 24a of the ratchet 24 is interposed between the pedal 22 and the end 24b of the ratchet 24.

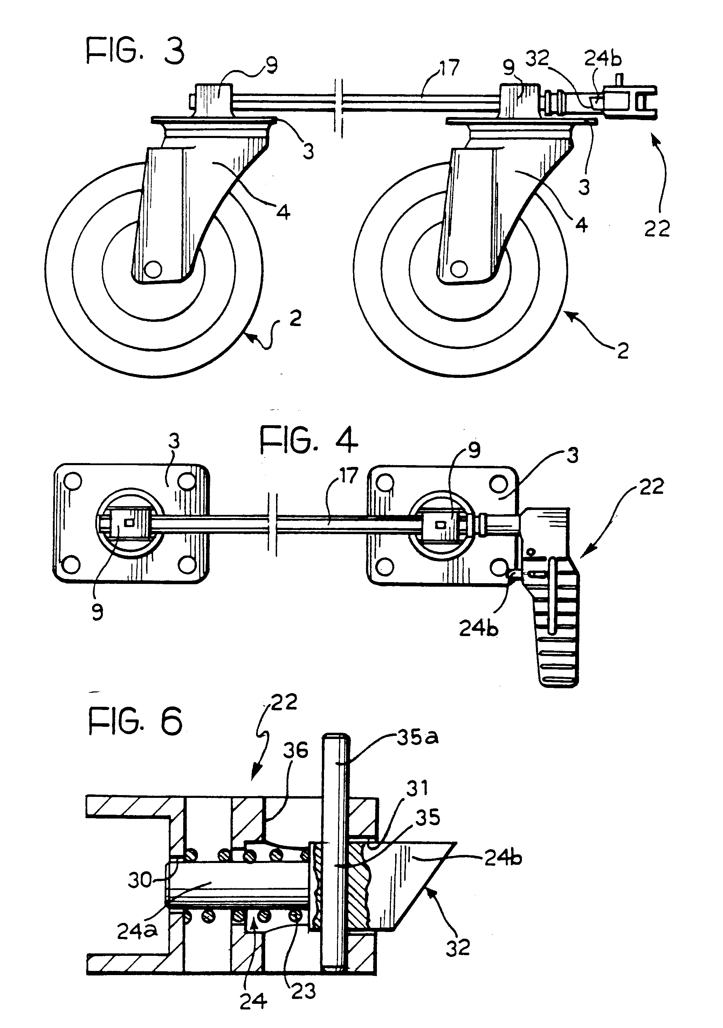

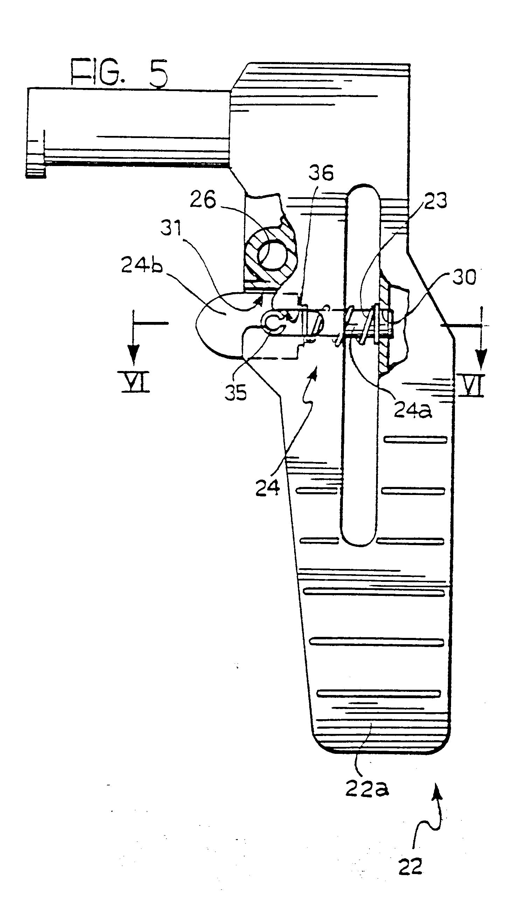

A pin 35 is transversely fixed to the end 24b of the ratchet 24, said pin being slidably mounted in a slot 36 of the pedal 22 and having an end 35a which projects on the upper side of the pedal. As it is clearly shown in Figure 6, the spring 23 urges the end 24b of the ratchet 24 so as it projects laterally from the pedal 22.

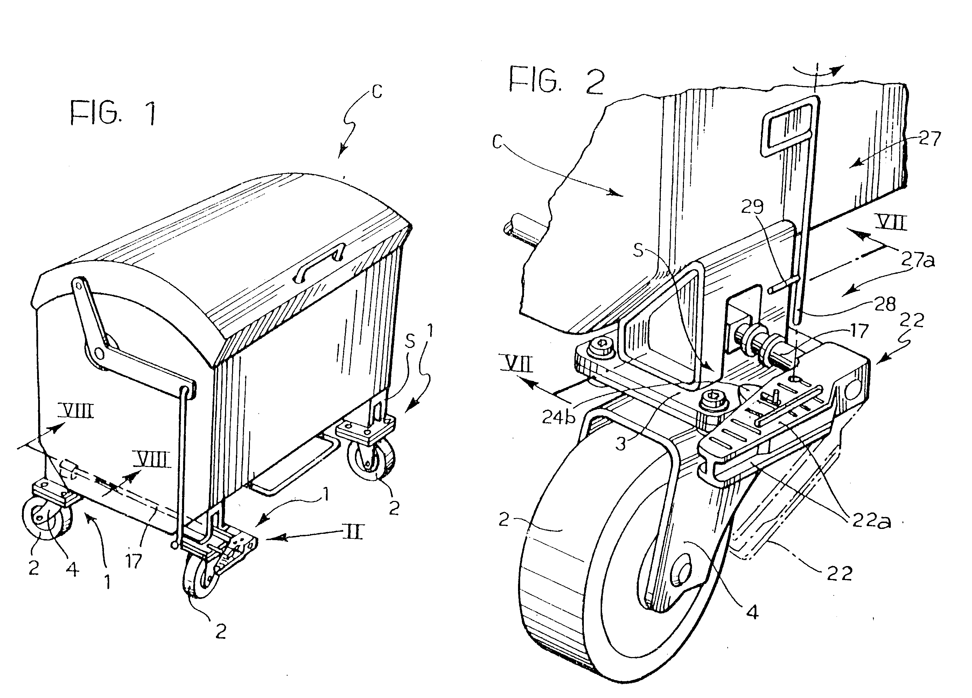

In Figure 2, the configuration of the pedal 22 in the condition in which the brakes of two castors 2 connected by the operating bar 17 are not applied is shown in continuous outline. When the pedal 22 is operated, the rotation of the operating bar 17 causes the flat plate 12 to move into its operative configuration by virtue of the engagement of the portion 18a of the cam 18 with the push-rod 10. The operating bar 17 is rotated by the pedal 22 against the action of the helical torsion spring 20.

During the downward movement of the pedal 22, the inclined face 32 of the end 24b of the ratchet 24 slides against the structure S of the trolley C so as resiliently to snap-engage against the lower face of the adjacent attachment plate 3 when the pedal has pivoted beyond a certain angle. The pedal thus remains locked in the configuration shown in broken outline in Figure 2 (the condition of braking of the trolley).

In order to release the pedal 22, it is necessary to use a suitable key 27 having an end 27a which is provided with a rod 28 adapted to be inserted in the hole 26 of the pedal and with a radial appendage 29 adapted to cooperate with the end 35a of the pin 35 fixed to the ratchet 24 in order to release the end 24b of the latter from the attachment plate 3, enabling the pedal 22 to return to the configuration corresponding to the release of the brakes of the castors, the return being effected by the helical torsion spring 20.

The pedal 22 is reversible and may therefore be mounted on the trolley in any position selected by the user.

Moreover, to advantage, the entire braking device according to the invention can be assembled, without the need for any sort of welding.

## Claims

1. A device for the braking of castors mounted on supports connected to a movable structure, comprising:
- a brake-operating bar (17) rotatably supported by the supports (9, 4, 3) and to which cam means (18) are keyed in correspondence with the supports (9, 4, 3),
- an operating pedal (22) keyed to the operating bar (17),
- braking members (10, 12) associated with each support (9, 4, 3), which cooperate with the cam means (18) and can assume a first configuration corresponding to the condition of braking of the castors (2) and a second configuration corresponding to the configuration in which the brakes (12) of the castors (2) are not applied,
- first resilient means (23, 24, 35) connected to the operating pedal (22) and provided with an appendage (24b) for resiliently snap-engaging a corresponding portion (3) of the structure when the pedal (22) is operated in order to lock the braking members (10, 12) in their first configuration,
characterised in that
the first resilient means comprise a compression spring (23) situated within the body of the pedal (22) and urging a ratchet (24) laterally slidable with reference to the pedal (22) and having an end (24b) defining said appendage.

2. A device according to Claim 1, characterised in that second resilient means (20) are interposed between the operating bar (17) and the supports (9, 3) of the castors (2) for urging the bar (17) to rotate towards the position corresponding to the second configuration of the braking members (10, 12).

3. A device according to Claim 1, characterised in that the pedal (22) includes a seat (26) for a releasing key (27) for releasing the appendage (24b) from the corresponding portion of the structure (3).

4. A device according to Claim 2, in which the support (4) for the castor (2) comprises a plate (3) fixed to the movable structure (S), characterised in that the appendage (24b) is in abutment with the plate (3) when the braking members (10, 12) are in the first configuration.

5. A device according to Claim 2, characterised in that the second resilient means comprise a helical torsion spring (20) coaxial with the operating bar (17).

6. A device according to Claim 5, in which the braking members for each castor (2) comprise a push-rod (10) mounted for vertical sliding in a bush (9) connected to the support (9, 4, 3) of the castor (2) and cooperating with the cam means (18), the push-rod (10) being adapted to act on a sprung braking plate (12) articulated to the support (4), characterised in that the bush (9) is made of two half-shells (A, B) joined together with the aid of a connecting element (16).

7. A device according to Claim 6, in which the bush (9) has a lower portion (9a) connected to the support (3) and an upper portion provided with a housing (15) for the cam means (18) and a hole for the passage of the operating bar (17), characterised in that the connecting element (16) is substantially U-shaped with its two arms connected to the half-shells (A, B).

8. A device according to Claim 7, characterised in that the connecting element (16) has an appendage (16a) which is adapted to cooperate with a corresponding seat (18b) associated with the cam means (18) to limit the rotation of the operating bar (17).

## Patentansprüche

1. Vorrichtung zum Bremsen von Laufrollen, die auf Halterungen befestigt sind, die an einem bewegbaren Aufbau angebracht sind, wobei die Vorrichtung enthält:
eine Bremsenbetätigungsstange (17), die von den Halterungen (9, 4, 3) drehbar getragen wird, und an der eine Nockeneinrichtung (18) in Übereinstimmung mit den Halterungen (9, 4, 3) aufgekeilt ist,
ein Pedal (22), das auf die Betätigungstange (17) aufgekeilt ist,
Bremselemente (10, 12), die jeder Halterung (9, 4, 3) zugeordnet sind, wobei sie mit der Nockeneinrichtung (18) zusammenwirken und eine erste Stellung einnehmen können, die dem Bremszustand der Laufrollen (2) entspricht, sowie eine zweite Stellung einnehmen können, die jener Stellung entspricht, in der die Bremsen (12) der Laufrollen (2) nicht angezogen sind,
eine erste Federeinrichtung (23, 24, 35), die mit dem Pedal (22) verbunden ist und eine Verlängerung (24b) besitzt, um elastisch in einen entsprechenden Teil (3) des Aufbaus einzuschnappen, wenn das Pedal (22) betätigt wird, um die Bremselemente (10, 12) in ihrer ersten Stellung zu verriegeln,
dadurch gekennzeichnet, daß
die erste Federeinrichtung eine Druckfeder (23) enthält, die im Körper des Pedals (22) angeordnet ist und auf eine Sperre (24) drückt, die seitlich im Hinblick auf das Pedal (22) verschiebbar ist und ein Ende (24b) besitzt, das die Verlängerung bildet.

2. Vorrichtung gemäß Anspruch 1, dadurch gekennzeichnet, daß die zweite Federeinrichtung (20) zwischen der Betätigungsstange (17) und den Halterung (9, 3) der Laufrollen (2) liegt, um die Stange (17) zu drücken, um sie zu jener Stellung zu drehen, die der zweiten Stellung der Bremselemente (10, 12) entspricht.

3. Vorrichtung gemäß Anspruch 1, dadurch gekennzeichnet, daß das Pedal (22) einen Sitz (26) für einen Freigabeschlüssel (27) aufweist, um die Verlängerung (24b) vom entsprechenden Teil des Aufbaus (3) freizugeben.

4. Vorrichtung gemäß Anspruch 2, wobei die Halterung (4) für die Laufrolle (2) eine Platte (3) enthält, die am bewegbaren Aufbau (S) befestigt ist, dadurch gekennzeichnet, daß die Verlängerung (24b) an der Platte (3) aufliegt, wenn sich die Bremselemente (10, 12) in der ersten Stellung befinden.

5. Vorrichtung gemäß Anspruch 2, dadurch gekennzeichnet, daß die zweite Federeinrichtung eine Schraubentorsionsfeder (20) enthält, die mit der Betätigungsstange (17) koaxial liegt.

6. Vorrichtung gemäß Anspruch 5, wobei die Bremselemente für jede Laufrolle (2) eine Schubstange (10) enthalten, die für eine vertikale Verschiebung einer Buchse (9) befestigt ist, die mit der Halterung (9, 4, 3) der Laufrolle (2) verbunden ist und mit der Nockeneinrichtung (18) zusammenwirkt, wobei die Schubstange (10) so aufgebaut ist, um auf eine gefederte Bremsplatte (12) zu wirken, die an der Halterung (4) gelenkig befestigt ist, dadurch gekennzeichnet, daß die Buchse (9) aus zwei Halbschalen (A, B) besteht, die mit Hilfe eines Verbindungselements (16) miteinander verbunden sind.

7. Vorrichtung gemäß Anspruch 6, wobei die Buchse (9) einen unteren Teil (9a), der mit der Halterung (3) verbunden ist, sowie einen oberen Teil besitzt, der mit einem Gehäuse (15) für die Nockeneinrichtung (18) und einer Öffnung für den Durchlaß der Betätigungsstange (17) versehen ist, dadurch gekennzeichnet, daß das Verbindungselement (16) im wesentlichen U-förmig aufgebaut ist, wobei seine beiden Arme mit den Halbschalen (A, B) verbunden sind.

8. Vorrichtung gemäß Anspruch 7, dadurch gekennzeichnet, daß das Verbindungselement (16) eine Verlängerung (16a) besitzt, die so aufgebaut ist, um mit einem entsprechenden Sitz (18b) zusammenzuwirken, der der Nockeneinrichtung (18) zugeordnet ist, um die Drehung der Betätigungsstange (17) zu begrenzen.

## Revendications

1. Dispositif de freinage de roulettes montées sur des supports connectés à une structure mobile, comportant :
- une barre de manoeuvre de frein (17) supportée en pouvant tourner par les supports ( 9, 4, 3) et sur laquelle des moyens de came (18) sont clavetés en correspondance avec les supports (9, 4, 3),
- une pédale de manoeuvre (22) clavetée sur la barre de manoeuvre (17),
- des pièces à freinage (10, 12) associées avec chaque support (9, 4, 3), coopérant avec les moyens de came (18) et pouvant assurer une première position correspondant à l'état de freinage des roulettes (2) et une seconde position correspondant à celle dans laquelle les freins (12) des roulettes (2) ne sont pas appliqués,
- des premiers moyens élastiques (23, 24,35) assemblés avec la pédale de manoeuvre (22) et comportant un appendice (24b) pour l'engagement avec enclenchement élastique d'une partie correspondante (3) de la structure quand la pédale (22) est manoeuvrée pour verrouiller les pièces de freinage (10, 12) dans leur première position,
caractérisé en ce que :
les premiers moyens élastiques comprennent un premier ressort de compression (23) situé entre le corps de la pédale (22) et poussant un cliquet (24) pouvant coulisser latéralement par rapport à la pédale (22) et ayant une extrémité (24b) définissant ledit appendice.

2. Dispositif selon la revendication 1, caractérise en ce que des seconds moyens élastiques (20) sont intercalés entre la barre de manoeuvre (17) et les supports (9, 3) des roulettes (2) pour pousser la barre (17) à tourner vers la position correspondant à la seconde position des pièces de freinage (10, 12).

3. Dispositif selon la revendication 1, caractérisé en ce que la pédale (22) comporte un siège (26) pour une clavette de libération (27) destinée à libérer l'appendice (24b) de la partie correspondante de la structure (3).

4. Dispositif selon la revendication 2, dans lequel le support (4) des roulettes (2) comporte une plaque (3) fixée sur la structure mobile (S), caractérisé en ce que l'appendice (24b) s'appuie contre la plaque (3) lorsque les pièces de freinage (10, 12) sont dans la première position.

5. Dispositif selon la revendication 2, caractérisé en ce que lesdits moyens élastiques comprennent un ressort de torsion hélicoïdal (20) coaxial avec la barre de manoeuvre (17).

6. Dispositif selon la revendication 5, dans lequel les pièces de freinage de chaque roulette (2) comprennent une tige de poussée (10) montée pour coulisser verticalement dans une bague (9) assemblée sur le support (9, 4, 3) des roulettes (2) et coopérant avec les moyens de came (18), la tige de poussée (10) étant agencée pour agir sur une plaque de freinage élastique (12) articulée sur le support (4), caractérisé en ce que la bague (9) est faite de deux demi-coquilles (A, B) assemblées à l'aide d'un élément d'assemblage (16).

7. Dispositif selon la revendication 6, dans lequel la bague (9) comporte une partie inférieure (9a) assemblée sur le support (3) et une partie supérieure prévue avec un boîtier (15) pour les moyens de came (18) et un trou pour le passage de la barre de manoeuvre (17), caractérisé en ce que l'élément d'assemblage (16) a une forme pratiquement en U, avec deux bras assemblés sur les demi-coquilles (A, B).

8. Dispositif selon la revendication 7, caractérisé en ce que l'élément d'assemblage (16) comporte un appendice (16a) qui est agencé de manière à coopérer avec un siège correspondant (18b) associé avec les moyens de came (18) de manière à limiter la rotation de la barre de manoeuvre (17).
